(19) **Europäisches Patentamt**

**European Patent Office**

**Office européen des brevets**

(11) **EP 0 703 517 B1**

(12) **EUROPÄISCHE PATENTSCHRIFT**

(45) Veröffentlichungstag und Bekanntmachung des Hinweises auf die Patenterteilung:
**01.03.2000 Patentblatt 2000/09**

(51) Int Cl.[7]: **G05B 19/42**

(21) Anmeldenummer: **95114503.6**

(22) Anmeldetag: **15.09.1995**

(54) **Verfahren zur Messung von Werkstücken mit einem handgeführten Koordinatenmessgerät**

Procedure for measuring of workpieces with a handguided coordinate measuring device

Procédé de mesure de pièces à l'aide d'un appareil de mesure de coordonnées déplacé manuellement

(84) Benannte Vertragsstaaten:
**DE ES FR GB IT SE**

(30) Priorität: **23.09.1994 DE 4433917**

(43) Veröffentlichungstag der Anmeldung:
**27.03.1996 Patentblatt 1996/13**

(73) Patentinhaber:
• **Carl Zeiss**
**89518 Heidenheim (Brenz) (DE)**
Benannte Vertragsstaaten:
**DE ES FR IT SE**
• **Carl-Zeiss-Stiftung trading as Carl Zeiss**
**89518 Heidenheim (Brenz) (DE)**
Benannte Vertragsstaaten:
**GB**

(72) Erfinder:
• **Brenner, Kurt**
**D-74589 Satteldorf (DE)**
• **Herzog, Klaus**
**D-73430 Aalen (DE)**
• **Seitz, Karl**
**D-73447 Oberkochen (DE)**
• **Lotze, Werner**
**D-01309 Dresden (DE)**

(56) Entgegenhaltungen:
**EP-A- 0 443 968**  **EP-A- 0 450 113**
**GB-A- 2 166 266**  **GB-A- 2 229 296**

**Beschreibung**

Handbediente Koordinatenmeßgeräte sind bisher, jedenfalls dann, wenn relativ genaue Meßergebnisse gefordert waren, nahezu ausschließlich mit sogenannten schaltenden Tastköpfen ausgerüstet worden. Der Meßvorgang läuft dabei so ab, daß der Meßarm des Koordinatenmeßgeräts mit dem daran befestigten schaltenden Tastkopf von der Bedienperson auf das Werkstück zu bewegt wird, bis der federnd gelagerte Taster mit seiner Tastkugel die Werkstückoberfläche berührt. Bei dieser ersten Berührung wird von einem empfindlichen Sensor ein Schaltsignal an die Steuerung des Koordinatenmeßgeräts gemeldet, das zum Festhalten der von den Koordinatenmeßeinrichtungen, d.h. den Maßstäben gelieferten Koordinatenmeßwerte dient. In gleicher Weise wird dann der nächste Meßpunkt aufgenommen und aus der Summe der nacheinander punktweise angetasteten Stellen am Werkstück wird dessen Form bzw. Toleranz durch den Auswerterechner des Koordinatenmeßgeräts ermittelt.

Das linienförmige Vermessen von Werkstücken, d.h. das quasikontinuierliche Aufnehmen von Meßpunkten auf einer Werkstückoberfläche mit Hilfe eines sogenannten messenden Tastkopfes im Scanning Betrieb war aus den verschiedensten Gründen bei handbedienten Koordinatenmeßgeräten bisher nicht möglich. Zum einen ist der Meßbereich, in dem die wenigen bekannten messenden Taster ein der Tasterauslenkung proportionales Signal abgeben, nur sehr klein und es ist sehr schwer wenn nicht unmöglich, die relativ großen trägen Massen eines Koordinatenmeßgeräts von Hand so zu bewegen, daß der Taster innerhalb der vorgegebenen engen Grenzen der Tasterauslenkung an der Werkstückoberfläche entlang gleitet. Außerdem werden durch die Handführung die unterschiedlichsten Kräfte und Momente auf den Meßarm des Koordinatenmeßgeräts ausgeübt. Hierdurch verformen sich jedoch die Führungsteile des Koordinatenmeßgeräts in einem Ausmaß, das genauen Messungen ausschließt. Letzteres gilt naturgemäß in noch stärkerem Maße auch für das Vermessen von Werkstücken mit handgeführten Maschinen und einfachen starren Tastern wie sie in der Anfangszeit der Koordinatenmeßtechnik häufig benutzt wurden.

Im quasikontinuierlichen Scanning Mode arbeiten deshalb heute ausschließlich in allen drei Achsen motorisch angetriebene CNC-gesteuerte Koordinatenmeßgeräte. Entsprechende Scanning-Verfahren sind beispielsweise in der US-PS 4 769 763, der US-PS 5 334 918 sowie in der DE-OS 42 12 455 beschrieben.

Soweit nach diesen Scanning Verfahren CNC-gesteuert unbekannte Werkstücke vermessen werden, arbeiten die Verfahren sehr langsam, da der Steuerrechner das weitere Fortschreiten des Scanning-Vorganges ständig wieder vom bereits zurückgelegten Weg ableiten muß.

In der DE-OS 42 38 139 ist ein leichtgängig geführtes Koordinatenmeßgerät mit relativ geringer Masse der geführten Teile bekannt geworden, mit dem auch Linienzüge am Werkstück unter Handführung aufgenommen werden können. Aber auch dort tritt das Problem auf, daß sich das Gerät unter den vom Bediener aufgebrachten Kräften verformt, so daß die Meßergebnisse ungenau werden. Außerdem ist die Aufnahme von Meßpunkten insofern noch umständlich, als der Beginn und das Ende eines Meßvorganges von der Bedienperson an die Steuerung des Gerätes gemeldet werden muß. Das Betätigen von entsprechenden Signaleinrichtungen stört jedoch das feinfühlige Abtasten der Werkstückoberfläche.

Die GB-Patentanmeldung GB 2 166 266 A zeigt ein motorbetriebenes Koordinatenmeßgerät bei dem zur Programmierung eines Verfahrweges für einen Meßablauf das Koordinatenmeßgerät von Hand verstellt werden kann. Das Koordinatenmeßgerät weist einen schaltenden Tastkopf auf, der im Falle der Werkstückberührung ein einzelnes Signal abgibt. Bei Abgabe des Signals werden dann die Meßwerte der Maßstäbe in den drei Koordinatenrichtungen x, y und z als Koordinatenmeßwert übernommen.

Es ist die Aufgabe der vorliegenden Erfindung ein Verfahren anzugeben, mit dem einfach und schnell Messungen hoher Genauigkeit an Werkstückoberflächen mit handgeführten Koordinatenmeßgeräten durchgeführt werden können und ein für dieses Verfahren besonders geeignetes Koordinatenmeßgerät anzugeben.

Diese Aufgabe wird durch ein Verfahren mit den im Anspruch 1 angegebenen Merkmalen bzw. durch ein Koordinatenmeßgerät mit den im Anspruch 9 angegebenen Merkmalen gelöst.

Die Erfindung geht aus von einem Koordinatenmeßgerät, welches einen in mindestens zwei Richtungen gegenüber einem beweglichen Träger auslenkbaren Taststift besitzt, der einen Antastformkörper, in der Regel eine Tastkugel trägt. Gemäß der Erfindung wird nun der Antastformkörper vorzugsweise in Kontakt mit dem zu vermessenden Geometrieelement des Werkstücks an diesem entlang bewegt und dabei aus den bei Bewegung des Trägers generierten Signalen der Koordinatenmeßeinrichtungen und/oder bei Auslenkung des Taststifts erzeugten Signalen der Meßwertgeber des Tasters werden Steuersignale abgeleitet, die den Beginn und das Ende eines Meßvorganges sowie die Gültigkeit der Koordinatenmeßwerte charakterisieren.

Da die Steuerung des Koordinatenmeßgeräts somit den Beginn und das Ende einer Messung selbsttätig erkennt, kann sich die Bedienperson ganz dem Abtasten des jeweiligen Geometrieelements am Werkstück widmen und braucht Beginn und Ende einer Messung nicht mehr zu signalisieren. Gleichzeitig ist sichergestellt, daß das Meßergebnis nicht durch ungültige Meßwerte verfälscht wird, die beispielsweise gewonnen wurden, als der Antastformkörper den Kontakt mit der Werkstückoberfläche verloren hatte, oder als übermässiger Druck auf die Werkstückoberfläche ausgeübt wurde.

Mit dem erfindungsgemäßen Verfahren lassen sich deshalb Werkstücke sehr schnell und mit hoher Genauigkeit von Hand vermessen.

Obwohl in vielen Fällen die bei Auslenkung des Taststifts generierten Signale ausreichend sind, um die genannten Steuersignale zu generieren, da die Auslenkung des Taststifts bei vielen Tastern ohnehin der Meßkraft proportional ist, kann es zweckmäßig sein, außerdem das Signal eines die Betätigungskraft der Handführung messenden Sensors auszuwerten und zusätzlich zur Ableitung der Steuersignale heranzuziehen, um hierdurch den Beginn und das Ende der Messung zu signalisieren, während die Tasterauslenkung bzw. die davon abgeleiteten Signale zur Charakterisierung der Gültigkeit der Koordinatenmeßwerte herangezogen werden.

Ganz besonders vorteilhaft ist es, wenn die zwischen dem Beginn und dem Ende eines Meßvorgangs generierten gültigen Koordinatenmeßwerte einschließlich der Meßwerte der zugehörigen Tasterauslenkung gespeichert werden. Denn aus diesen gespeicherten Meßwerten läßt sich durch geeignete Auswerteprogramme nach Art eines Expertensystems selbständig die Form des abgefahrenen geometrischen Elementes erkennen, d.h. ob die abgefahrene Linie einen Kreis beschrieben hat, auf einer ebenen Fläche lag, einen Zylindermantel, ein Rechteck oder eine Elypse umfahren hat. Der Bediener kann dann das nach Ende eines Meßvorganges angezeigte geometrische Element bei Zustimmung einfach bestätigen und bekommt dann dessen Maße, Abweichungen, Toleranzen etc. angezeigt oder ausgedruckt.

Dieses Verfahren läßt sich auch in leicht abgewandelter Form in Verbindung mit sogenannten schaltenden Tastern einsetzen, die kein der Auslenkung des Tasters proportionales, analoges Signal abgeben, sondern nur den Zeitpunkt der Berührung des Werkstücks mit dem Taster signalisieren. In diesem Falle kann es ausreichend sein, die Form des punktweise gemessenen Geometrieelementes aus den Antastpunkten allein zu bestimmen, gegebenenfalls noch unter Einbeziehung der abgespeicherten Koordinaten für den vom Taster zwischen den Meßpunkten zurückgelegten Weg.

Das zur Durchführung des Verfahrens besonders geeignete KMG besitzt eine Einrichtung zur Erzeugung von Steuersignalen aus den bei Bewegung des Trägers des Tasters generierten Signale der Koordinatenmeßeinrichtungen und/oder bei Auslenkung des Taststifts erzeugten Signalen der Meßwertgeber des Tasters, welche Einrichtung mit einem Speicher zur Abspeicherung von generierten Koordinatenmeßwerten einschließlich der zugehörigen Tasterauslenkungen gekoppelt ist. Außerdem ist es vorteilhaft, wenn dem Taster eine Betätigungshandhabe zugeordnet ist, die zumindest bezüglich einiger Freiheitsgrade der Bewegung vom Taststift bzw. von dem ihn tragenden Meßarm kräftemäßig entkoppelt ist. Die Betätigungshandhabe stellt sicher, daß die Betätigungskräfte in Richtung der Führungen in das Meßgerät eingeleitet werden und daß keine Zwangskräfte, Drehmomente etc. auf die Führungen des Koordinatenmeßgeräts ausgeübt werden. Zweckmäßige Ausgestaltungen für die Betätigungshandhabe sind in den Unteransprüchen beschrieben und in den Ausführungsbeispielen dargestellt.

Von besonderem Vorteil für die Bedienbarkeit und das Erzeugen gültiger Meßwerte ist außerdem, wenn das Koordinatenmeßgerät eine Einrichtung zur Rückkopplung eines visuellen oder akustischen Signals besitzt, das die Gültigkeit der Koordinatenmeßwerte und/oder das Überschreiten vorbestimmter Grenzwerte der Tasterauslenkung anzeigt. Das ermöglicht es der Bedienperson, mit konstanter Betätigungskraft an der Werkstückoberfläche entlang zu fahren, indem die Bedienperson sozusagen in den "Kraftregelkreis" des Koordinatenmeßgeräts eingebunden wird.

Im Bezug auf Leichtgängigkeit und massearme Führungsteile ist es zweckmäßig, wenn der Taster des Koordinatenmeßgeräts über aufeinanderfolgende Drehachsen gelenkig mit einem höhenverstellbaren Träger verbunden ist, das Koordinatenmeßgerät also einen Aufbau ähnlich dem besitzt, wie er in der DE-OS 42 38 139 beschrieben ist. Der gelenkige Taster kann beispielsweise über ein als Materialdünnstelle ausgebildetes Kardangelenk senkrecht zu seiner Schaftrichtung auslenkbar gelagert sein wie das in der DE-OS 18 04 253 beschrieben ist.

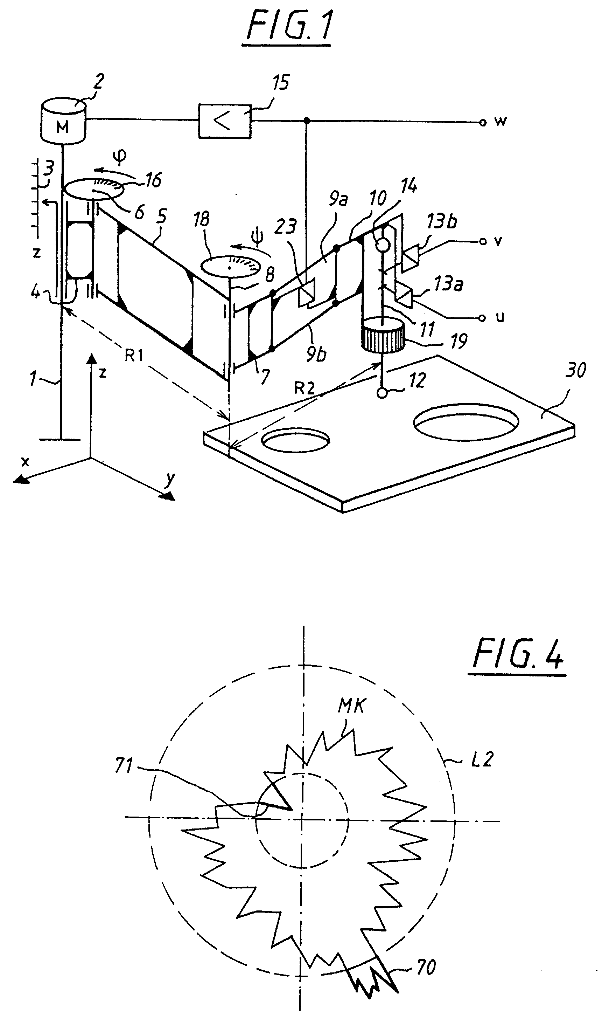

Weitere Vorteile der Erfindung ergeben sich aus der nachfolgenden Beschreibung von Ausführungsbeispielen anhand der Figuren 1 - 9 der beigefügten Zeichnungen. Hierbei sind

| | |
|---|---|
| Figur 1 | eine kinematische Schemazeichnung eines Koordinatenmeßgeräts mit zwei parallelen Drehachsen; |
| Figur 2 | eine perspektivische Darstellung des Geräts aus Figur 1 mit einem Blockschaltbild der daran angeschlossenen Auswerte- und Steuerelektronik; |
| Figur 3a - 3c | einfache Skizzen, die das manuelle Abscannen von von Geometrieelementen verdeutlichen; |
| Figur 4 | ein Polarkoordinatendiagramm, in dem die beim Abscannen eines kreisförmigen Geometrieelements aufgebrachten Meßkräfte dargestellt sind; |
| Figur 5 | ein Flußdiagramm eines für das Gerät nach Figur 1 geeigneten Meßpro- |

gramms;

Figur 6 eine kinematische Schemazeichnung eines für das Gerät nach Figur 1 geeigneten Tasters nach einem ersten Ausführungsbeispiel;

Figur 7 eine kinematische Schemazeichnung eines für das Gerät nach Figur 1 geeigneten Tasters nach einem zweiten Ausführungsbeispiel;

Figur 8 eine Konstruktionszeichnung des Tastkopfs für das Gerät nach Figur 1 nach einem besonders vorteilhaften Ausführungsbeispiel;

Figur 9 a - d detaillierte Darstellungen eines alternativen Ausführungsbeispiels für den Handgriff (19) aus Figur 6.

Das in Figur 1 schematisch gezeichnete Koordinatenmeßgerät besitzt eine als vertikale z-Führung ausgebildete Säule (1), an der ein Träger (4) mit Hilfe eines Antriebs (2) verschieblich gelagert ist. Die vertikale z-Position kann über einen Maßstab (3) photoelektrisch ausgelesen werden.

Am Träger (4) ist die Drehachse (6) befestigt, um die der erste Gelenkarm (5) in der Ebene (x, y) verschwenkt werden kann. Den Schwenkwinkel φ gibt ein ebenfalls photoelektrisch ausgelesener Teilkreis (16) auf der Achse (6) an.

Am ersten Gelenkarm (5) ist eine zweite zur vertikalen Achse (6) parallele Achse (8) befestigt. An dieser Achse (8) ist ein zweiter Gelenkarm (7) ebenfalls drehbar gelagert. Zur Erfassung der Drehbewegung (Schwenkwinkel ψ) dieser zweiten Drehachse (8) dient ein Teilkreis (18) in Verbindung mit einem nicht dargestellten photoelektrischen Abtastsystem.

Der zweite Gelenkarm (7) bildet gleichzeitig den Träger für einen Taster (10), der über ein Federparallelogramm mit den beiden gelenkigen Schenkeln (9a, 9b), am Träger (4) angelenkt ist. Über das Federparallelogramm (9a/9b) ist der Taster (10) in der Vertikalen beweglich. Die Auslenkung w des Federparallelogramms wird über ein Meßsystem (23), erfaßt und über einen Verstärker (15) dem Motor (2) weitergemeldet, der größere Auslenkung des Parallelogramms durch Nachfahren des Trägers (4) ausregelt.

Der Taststift (11) ist am Taster (10) über ein federndes Kardan-Gelenk (14) in der Ebene (x, y) auslenkbar. Das Maß der Auslenkung wird über zwei senkrecht zueinander angeordnete Meßsysteme (13a, 13b) erfaßt. Die Position der Tastkugel (12) in der x-y-Ebene ergibt sich somit aus den Meßwerten φ und ψ der Winkelmeßsysteme (16) bzw. (18) in Verbindung mit den Längen R1 und R2 der beiden Gelenkarme (5) und (7) nach folgender Formel, die man anhand von Figur 1

leicht ableiten kann:

$$X = R1 \cdot \cos \varphi + R2 \cdot \cos(\varphi + \psi)$$

$$Y = R1 \cdot \sin \varphi + R2 \cdot \sin(\varphi + \psi)$$

wobei R2 und ψ noch von der Auslenkung (u,v,w) des Taststifts (11) abhängt.

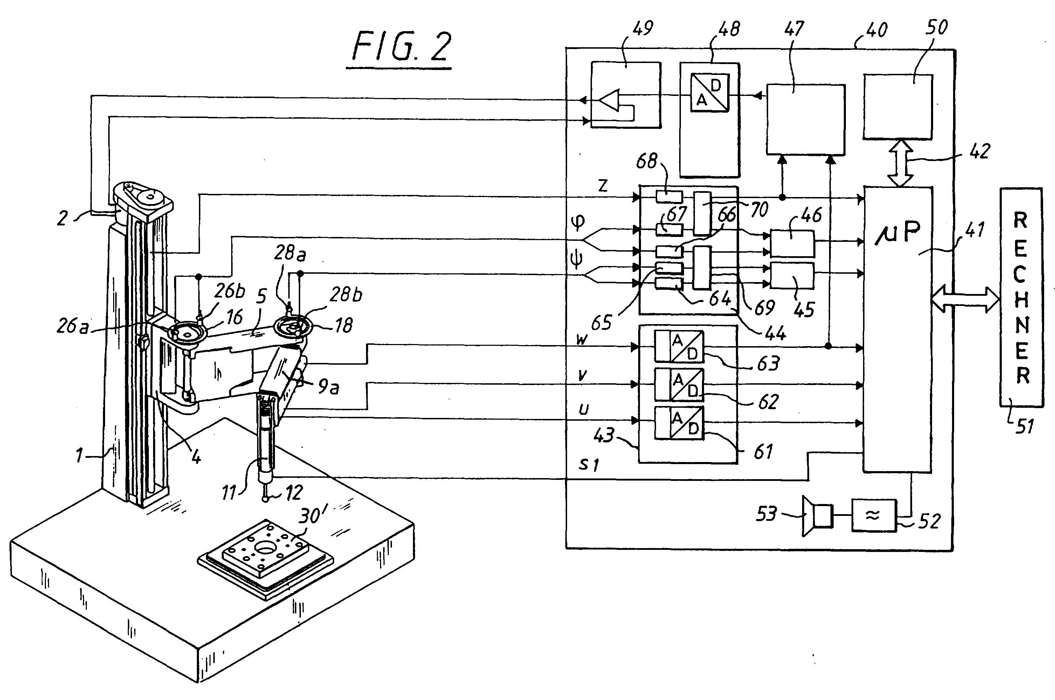

Wie aus dem Blockschaltbild nach Figur 2 hervorgeht sind die Signalausgänge (u,v,w) der drei Meßwertgeber (13a,b und 23) einer Funktionsbaugruppe (43) mit beispielsweise je einem Trägerfrequenzmeßverstärker (61,62 und 63) und nachgeschaltetem Analog/Digitalwandler zugeführt. Bei den Meßwertgebern (13a,b und 23) handelt es sich um Induktivmeßsysteme, die nach dem Trägerfrequenzverfahren arbeiten. Die digitalisierten Meßwerte der Taststiftauslenkung sind an die Dateneingänge eines schnellen Mikroprozessors (41) gelegt. Der Mikroprozessor (41) erhält ebenfalls die Meßwerte der Koordinatenmeßeinrichtungen, d.h. des die z-Verstellung messenden Maßstab/Gebersystems (3) und der beiden Winkelgeber (16 und 18). Letztere werden zur Vermeidung von Zentrierfehlern jeweils durch zwei beidseitig der Drehachse angeordnete Leseköpfe (26a/26b bzw. 28a/28b) ausgelesen und die Paare von Winkelmeßsignalen φ und ψ, d.h. die Sinus/Cosinussignale der inkrementalen Winkelmeßsysteme werden in Interpolatorschaltungen (66-68) 80-fach interpoliert und in Mehrfach-Zählerbausteinen (69 und 70) gezählt. Die Interpolatoren (65-68) und Zähler (69,70) sind in der mit (44) bezeichneten Funktionsbaugruppe "Wegmessung" zusammengefaßt. Zwei Summationsschaltungen (45 und 46) bilden den Mittelwert der Winkelmeßwerte der Geberpaare (26a/b und 28a/b). Die daraus gewonnenen aktuellen digitalen Winkelmeßwerte φ und ψ werden ebenso wie der Meßwert (z) drei Digitaleingängen des Mikroprozessors (41) zugeführt.

Gleichzeitig gelangen die Meßwerte der Tasterauslenkung (w) und der z-Meßwert zu einer Antriebssteuerungs-Schaltung (47). Diese bildet ein digitales Regelsignal, das über einen Digital/Analogwandler (48) einem Servoverstärker (49) zugeführt ist, der außerdem an den Tachogenerator des Motors (2) angeschlossen ist. Die Antriebssteuerung (47) sorgt dafür, daß der Motor (2) den Träger (4) des Geräts stets der Auslenkung des Federparallelogramms (9a/9b) nachführt, um die Auslenkung (w) zu kompensieren.

Über einen Datenbus ist der Mikroprozessor (41) an einen Auswerterechner (51), einen handelsüblichen PC angeschlossen. Dem Mikroprozessor zugeordnet ist außerdem eine Speicherbaugruppe (50), in der die vom Mikroprozessor empfangenen Meßwerte (u,v,w und φ, ψ, z) wie noch nachfolgend beschrieben wird eingespeichert werden können.

Der Mikroprozessor (41) ist außerdem mit einem Frequenzgenerator (52) und einem Lautsprecher (53) gekoppelt. Eine seiner Aufgaben besteht darin, über ein entsprechendes Auswerteprogramm in seiner Firmware die Taststiftauslenkung (u,v,w) zu überwachen und ein akustisches Signal zu erzeugen, dessen Frequenz davon abhängt, ob eines der Signale (u,v oder w) einen bestimmten maximal zulässigen Betrag (L2) überschreitet, oder ob alle Signale (u,v und w) unterhalb einer unteren Schwelle (L1) für die Tasterauslenkung liegen. In beiden Fällen wird ein akustisches Signal ausgegeben, um dem Benutzer anzuzeigen, daß er den für das Aufnehmen gültiger Meßwerte zulässigen Bereich verlassen hat.

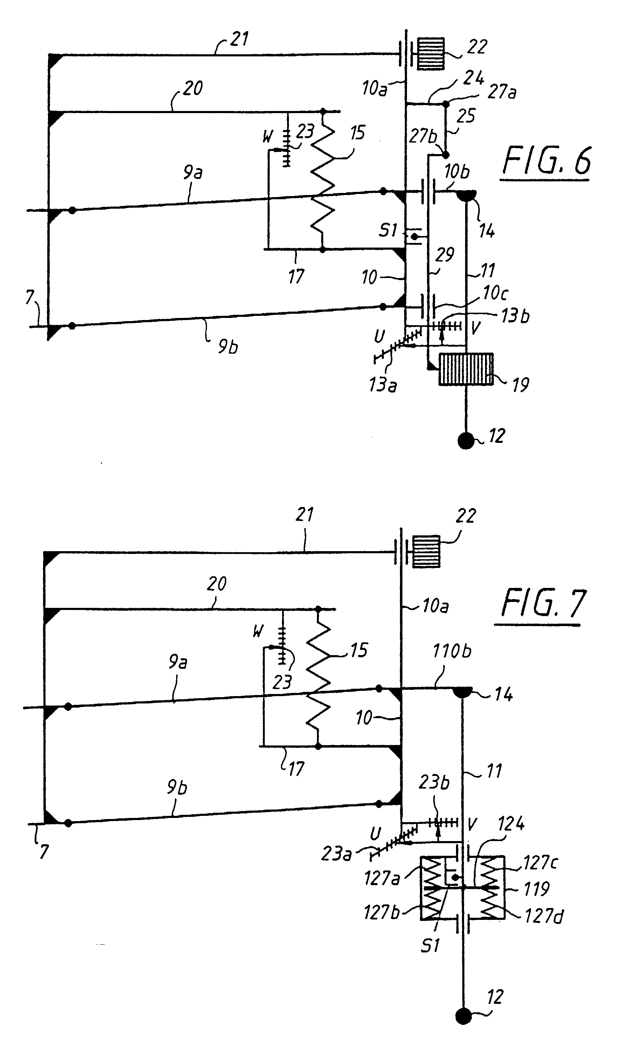

Bevor im Detail auf die Art und Weise des Messens mit dem anhand der Figuren 1 und 2 beschriebenen Gerät eingegangen wird, soll an dieser Stelle der Taster des Gerätes anhand von Figur 6 und Figur 7 näher erläutert werden. Die beiden Ausführungsbeispiele nach Figur 6 und Figur 7 unterscheiden sich allein durch die an den Taster bzw. den Taststift angesetzte Betätigungshandhabe.

Der in Figur 6 beschriebene Taster (10) ist am Träger (7), d.h. am Gelenkarm des Geräts aus Figur 1 über ein Federparallelogramm mit den beiden Schenkeln (9a und 9b) gelenkig verbunden. Eine Feder (15) zwischen einer mit dem Träger (7) verbundenen Stange (20) und einer mit dem Taster (10) verbundenen Stange (17) dient der Gewichtsentlastung des Tasters (10) und hält diesen in der Nullage des mit (23) bezeichneten vereinfacht dargestellten Induktivmeßsystems, mit dem die vertikale Auslenkung (w) des Tasters gemessen wird.

Ein Verlängerungsstück (10a) des Tasters 10 ist mittels einer Klemmeinrichtung (22) an das Ende eines mit dem Träger (7) verbundenen Biegebalkens (21) koppelbar. Über die Klemmung in der Vertikalen läßt sich erreichen, daß wie nachfolgend noch beschrieben wird, Profile am Werkstück in einer vorbestimmten Höhe abgefahren werden können.

Gleichfalls mit dem Taster (10) verbunden ist der Taststift (11) mit der Tastkugel (12). Der Taststift (11) ist über ein durch Materialausdünnung gebildetes Kardangelenk (14) in der waagerechten Ebene (x,y) auslenkbar gehalten. Zur Erfassung der Tasterauslenkung in der Ebene senkrecht zur Vertikalen dienen die beiden Induktivmeßsysteme (13a und 13b).

Bewegt wird der Taster (10) vom Bediener mittels eines Handgriffs (19), der über eine Blattfeder (24) in der Vertikalen nachgiebig am Taster (10) gelagert ist. In das Verbindungsteil (29) zwischen der Blattfeder (24) und dem Handgriff (19) sind außerdem zwei Gelenke (27a und 27b) eingebaut, die den Handgriff (19) bezüglich Biegekräften vom Taster (10) entkoppeln. Der Handgriff (19) ist als Ringhülse ausgebildet, die den Taststift (11) umgibt. Über einen Schalter (S1) zwischen dem Taster und dem Verbindungsteil (29) des Handgriffs (19) läßt sich signalisieren, daß die Betätigungskraft in der Vertikalen eine bestimmte Schwelle (L0) überschritten hat.

Gleichfalls vom Taster (10) bezüglich Biegekräften entkoppelt ist der Handgriff (119) im Ausführungsbeispiel für den Taster nach Figur 7. Gleiche Teile sind dort im Vergleich zu Figur 6 gleichen Bezugsziffern bezeichnet und werden an der Stelle nicht nochmals erläutert. Der Handgriff (119) ist hier direkt am Taststift (11) gelagert und zwar mittels einer ringförmigen Platte (124) am Taststift (11), die beidseitig an mehreren Stellen durch Federn (127a - 127d) im Innern der als ringförmige zylindrische Hülse ausgebildeten Handhabe (119) eingespannt ist.

Auch hier ist wieder ein Schalter (S1) vorgesehen, der die Betätigungskraft zwischen der Handhabe (119) und dem Taststift (11) in der Vertikalen bzw. das Überschreiten einer Mindestkraft (L0) signalisiert.

Beim Messen unterschiedlicher Geometrieelemente mit dem vorstehend beschriebenen Gerät geht man folgendermaßen vor:

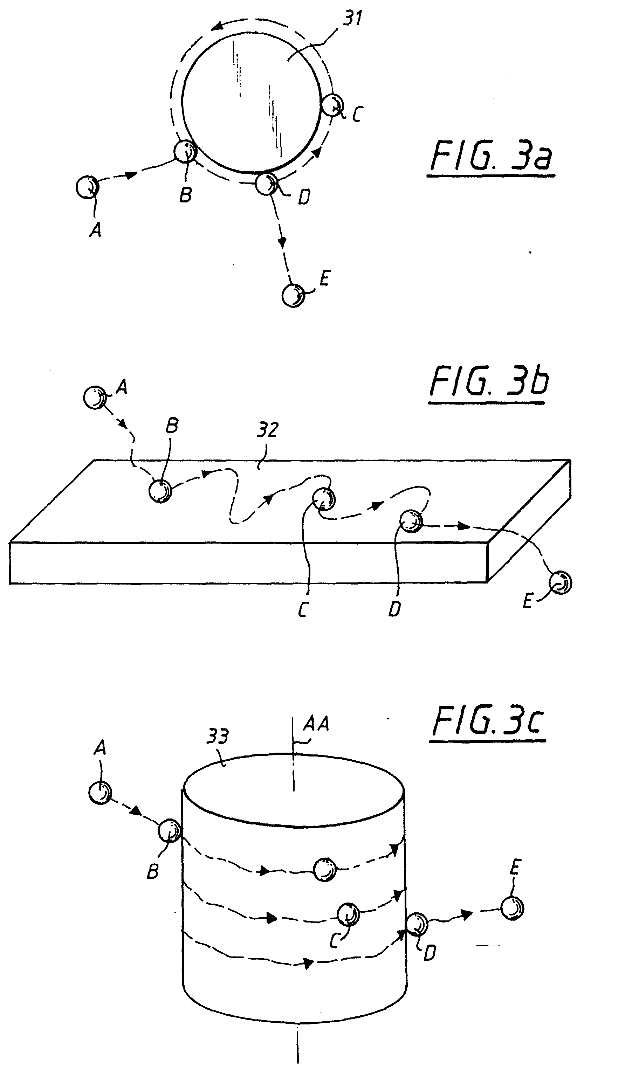

Wird z.B. eine in der x/y-Ebene liegende Bohrung oder die in Figur 3a dargestellte Welle (31) abgetastet, so wird die Auslenkung (u,v) des Taststifts (11) durch die Meßsysteme (13a und 13b) ermittelt, gleichzeitig ergeben sich über die Federkennlinie des elastischen Kardangelenks (14) auch die dabei aufgebrachten Kräfte. In der Vertikalen wird in diesem Falle keine Kraft, da die anhand von Figur 2 erläuterte Servosteuerung jede vom Meßsystem (23) angezeigte Auslenkung (W) durch ein entsprechendes Nachfahren des Trägers (4) kompensiert.

Soll die Bohrung bzw. die Welle (31) in einer bestimmten Höhe angetastet werden, so ist vorher die Auslenkung des Federparallelogramms (9a,b) über die Klemmeinrichtung (22) zu blockieren und die Servosteuerung des z-Schlittens (4) auszuschalten. Wird jetzt auch eine Betätigungskraft in der Vertikalen aufgebracht, so erzeugt diese eine Biegung des Biegebalkens (21), welche vom Meßsystem (23) erfaßt wird. Über die Federkennlinie des Biegebalkens (20) ist ebenfalls die auf den Träger (7) des Tasters (10) einwirkende Kraft in der vertikalen z-Richtung bekannt. Auf diese Weise sind also alle Kräfte bzw. Momente, die aus der Anlage der Tastkugel (12) am Werkstück resultieren, bekannt und können zur Korrektur der Biegung des Taststifts (11) bzw. der Deformation des Gelenkarms (4-9) verwendet werden, wie das in der am gleichen Tage eingereichten Anmeldung der Anmelderin mit dem Titel "Verfahren zur Kalibrierung eines Koordinatenmeßgerätes mit zwei rotatorischen Achsen" beschrieben ist. Das Koordinatenmeßgerät gestattet es damit sehr gut, die zu vermessenden Geometrieelemente im Scanning Verfahren linienförmig mit hoher Genauigkeit abzutasten.

Wird eine in der x/y-Ebene liegende Fläche wie beispielsweise die Fläche (32) nach Figur 3b angetastet, so würde die Antastkraft in z-Richtung bei Verschiebung des Taststifts (11) auf der Fläche (32) lediglich über die Reibungskraft zwischen Tastkugel (12) und Fläche (32) eine Auslenkung der Meßsysteme (23a und 23b) bewirken. Die zwischen Taststift (11) und Taster (10) wirkende Kraft in z-Richtung hingegen ist nicht bekannt.

Dieser Umstand kann bei geringer Kraft und kleinen Reibungskoeffizienten zu Unsicherheiten führen. Denn tastet man beispielsweise in einer Stufenbohrung die Bohrungswand und die Absatzfläche gleichzeitig an, so wäre in diesem Fall überhaupt nicht zu erkennen, ob nicht nur an der Bohrungsinnenwand sondern auch an der Absatzfläche Kontakt zur Tastkugel (12) besteht. Das ist nur dann der Fall, wenn in der vertikalen z-Richtung eine bestimmte Kraft überschritten wird, was durch schließen des Schalters (S1) signalisiert wird.

Soll die Achslage des in Figur 3c skizzierten Zylinders (33) bestimmt werden, so wird der Zylindermantel in unterschiedlichen Höhen, beispielsweise spiralförmig abgefahren, während die Klemmeinrichtung (22) deaktiviert ist und der Motor (2) den Träger (4) des Gelenkarms dem handgeführten Taststift (11) nachfährt.

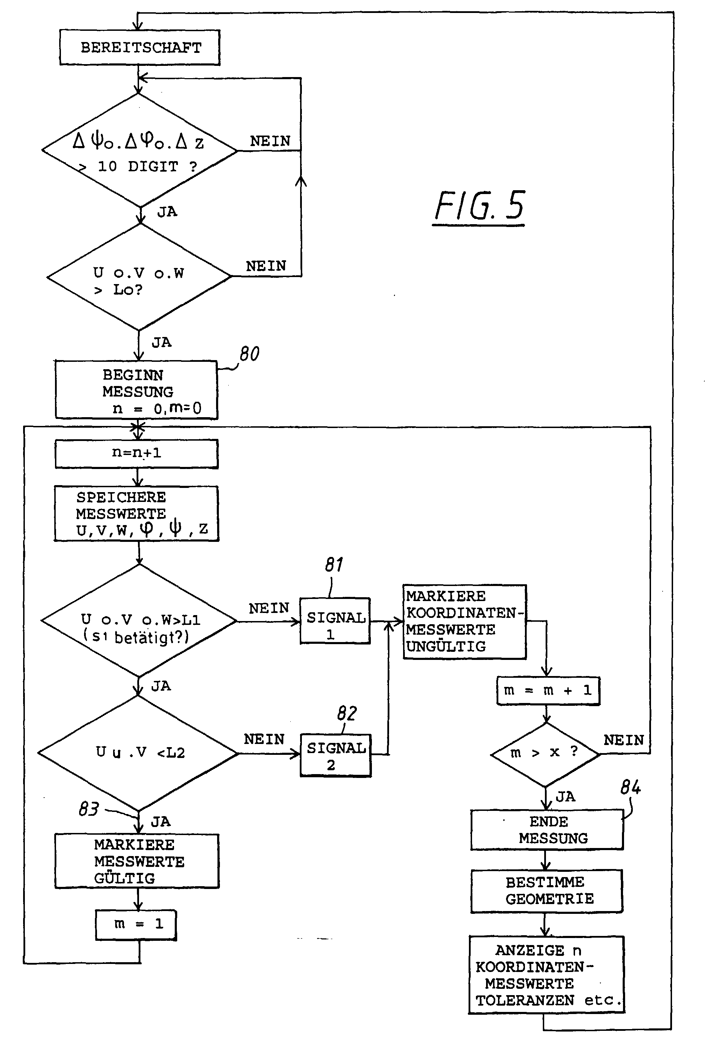

Besonders bedienungsfreundlich ist das Messen mit dem beschriebenen Gerät dann, wenn wie beispielhaft anhand des im Folgenden beschriebenen Verfahren erläutert der Beginn und das Ende eines Meßvorganges an einem Geometrieelement automatisch erkannt wird und zudem gewährleistet wird, daß nur Meßpunkte ausgewertet werden, die mit einer in bestimmten Grenzen (L1 und L2) liegenden Antastkraft erfaßt wurden. Denn hierdurch wird zum einen gewährleistet, daß die Tastkugel bei der Messung überhaupt in Kontakt mit der Werkstückoberfläche war und zum anderen, daß die Kraft den für eine zuverlässige Korrektur zulässigen Bereich auch nicht überschritten hat. Dieses automatische Verfahren kann durch entsprechende Programmierung der Firmware des Mikroprozessors (41) (Figur 2) realisiert werden, beispielsweise in der Art, wie das in dem Flußdiagramm nach Figur 5 dargestellt ist.

Danach befindet sich das Meßgerät in Bereitschaft, wenn beispielsweise die Tastkugel (12) in der in Figur 3a - 3c gezeigten Stellung (A) ohne Kontakt mit dem Werkstück irgendwo im Meßbereich des Gerätes steht. In diesem Modus "Meßbereitschaft" werden laufend zwei Kriterien abgeprüft, nämlich ob sich der Träger (7) des Tasters in irgendeiner Weise bewegt und ob durch Auslenkung der Meßsysteme (u oder v oder w) über eine Mindestschwelle (L0) das Auftreten einer Meßkraft, d.h. Kontakt mit dem Werkstück signalisiert wird. Das erste Kriterium ist erfüllt, sobald die Tastkugel aus ihrer Ruheposition (A) wegbewegt wird, und das zweite Kriterium ist in dem Moment erfüllt, in dem sie in Stellung (B) die Oberfläche der Geometrieelemente (Kreis 31), (Fläche 32) oder (Zylinder 33) in Figur 3a bzw. 3b oder 3c berührt. Von diesem Augenblick an werden die Koordinatenmeßwerte φ, ψ und z, die die Bewegung des Trägers (7) im Raum beschreiben, und die gemessenen Taststiftauslenkungen u,v und w simultan mit hoher Punktdichte gespeichert. Gleichzeitig wird für jeden Meßpunkt (n) abgeprüft, ob die Antastkraft für irgendeine der Auslenkrichtungen über einer Mindestschwelle (L1) liegt und für die Auslenkungen (u und v) unter einer einstellbare Maximalschwelle (L2) liegt. Nur wenn beide Bedingungen erfüllt sind, wird der Meßwert als gültig markiert und der nächste Meßwert (n + 1) eingespeichert.

Ist eine der beiden genannten Bedingungen nicht erfüllt, so wird der entsprechende Meßwert als ungültig markiert und der nächste Meßpunkt eingespeichert. Gleichzeitig wird die Zahl der aufeinanderfolgenden ungültigen Meßwerte (m) gezählt und abgefragt, ob dieser Wert (m) eine festzusetzende obere Grenze (x) überschritten hat. Das ist beispielsweise dann der Fall, wenn vom zu vermessenden Geometrieelement abgetastet wird (Stellung D in den Figuren 3a, 3b und 3c). In dem Moment verschwindet nämlich die Meßkraft, alle nachfolgenden Punkte werden ungültig markiert und wenn die Tastkugel dann zur Stellung (E) beispielsweise zwei Zentimeter von der Werkstückoberfläche wegbewegt wird, sind z.B. aufeinanderfolgend 200 ungültige Meßpunkte aufgenommen worden, was das Ende der Messung signalisiert.

Beim Abtasten des kreisförmigen Geometrieelements nach Figur 3a ergibt sich im Polardiagramm nach Figur 4 für die Meßkraft (MK) beispielsweise der dort dargestellte Verlauf. An den Stellen (70) und (71) hat die Taststift-Auslenkung und damit die Meßkraft (MK) den durch die eingestellten Schwellen (L2 und L1) begrenzten zulässigen Bereich überschritten. Dieses Über- bzw. Unterschreiten ist der Bedienperson bereits während des Abfahrens der Werkstückoberfläche durch einen hohen bzw. tiefen Signalton aus dem Lautsprecher (53) (Figur 2) angezeigt worden, worauf sie den Druck auf das Werkstück verringert bzw. erhöht hat. Die zugehörigen Meßwerte sind als ungültig markiert worden und aus den verbleibenden Meßwerten berechnet das Programm automatisch ein die Meßwerte möglichst gut annäherndes Geometrieelement, im beschriebenen Beispiel einen Kreis. Dieses Geometrieelement wird der Bedienperson auf dem Monitor des Auswerterechners (51) als Meßergebnis angeboten und kann bestätigt werden. Bestätigt die Bedienperson das vorgeschlagene Geometrieelement, so werden ihm anschließend in an sich bekannter Weise die Meßwerte in Form eines Meßprotokolles ausgedruckt, einschließlich der eventuell vorgegebenen Toleranzen etc. Das Gerät befindet sich dann wieder im Status Meßbereitschaft und es kann das nächste Geometrieelement vermessen werden. Bestätigt die Bedienperson das vorgeschlagene Geometrieelement nicht, wird er zur Auswahl eines anderen Elementes aufgefordert und wählt beispielsweise einen Zylinder aus. In dem Falle reicht das Meßergebnis nicht aus, um die Lage der Zylinderachse zu bestimmen und das Programm fordert die Bedienperson auf, den Zylinder in einer zweiten Höhenlinie abzufahren und geht in den Modus Meßbereitschaft.

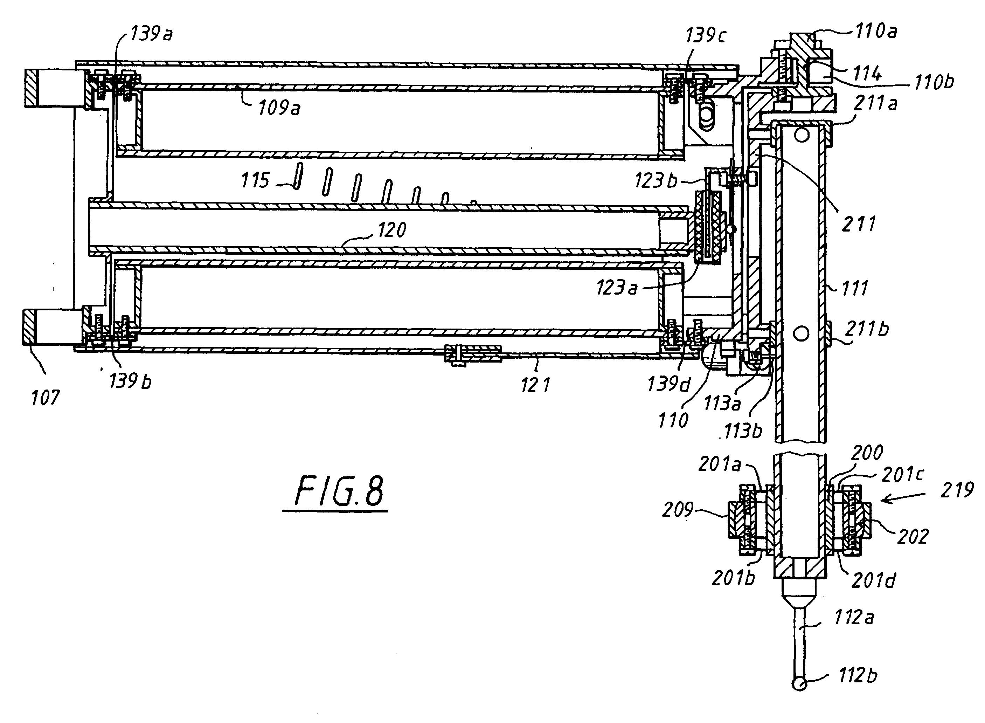

Der in der Konstruktionszeichnung nach Figur 8 detaillierter gezeichnete Tastkopf des Meßgeräts erlaubt ein besonders feinfühliges manuelles Abtasten der zu vermessenden Werkstücke unter weitestgehender Vermeidung von Kräften und Momenten durch die Bedienperson. In der gezeichneten Darstellung ist mit (107) die Aufnahme bezeichnet, mit der der Tastkopf an der zweiten Drehachse (8) gehalten ist. Das Federparallelogramm, das die Auslenkung des Tastkopfs in der vertikalen z-Richtung sicherstellt, ist durch zwei Rohre (109a) und (109b) mit rechteckigem Querschnitt gebildet, deren Enden über angeschraubte Blattfedern (139a,b und c) mit der Aufnahme (107) bzw. dem Träger (110) für den Taststift verbunden sind. Eine diagonal gespannte Feder (115) dient zur Gewichtsentlastung des Trägers (110). Am Träger (110) ist auch der Kern (123b) des Induktivmeßsystems für die z-Verstellung befestigt, während der Spulenkörper (123a) vom Ende eines Rohres (120) getragen wird, das fest mit der Aufnahme (107) verbunden ist.

Am oberen Ende des Taststiftträgers (110) ist ein Drehteil (110a) aufgeschraubt, in das eine Ringnut (110b) eingedreht ist, so daß eine Materialdünnstelle (114) entsteht. Diese Materialdünnstelle dient als elastisches Kardangelenk für den daran aufgehängten Taster (111). Zur Aufnahme des Tasters (111) ist an das scheibenförmige untere Teil des Drehteils (110a) ein Halteteil (211) angesetzt, welches mit zwei Hülsen (211a) und (211b) versehen ist, in die der Tasterschaft (111) eingesetzt ist. In diesen Tasterschaft (111) ist am unteren Ende der eigentliche Taststift (112a) mit der Tastkugel (112b) eingeschraubt.

Mit (113a) und (113b) sind der Spulenkörper und der Kern eines der beiden Meßsysteme bezeichnet, die zur Messung der Auslenkung des Tasterschafts (111) um die Materialdünnstelle (114) dienen. Die beiden Meßsysteme sind mit ihrer Achse im Winkel von 45° bezogen auf die Zeichnungsebene befestigt.

Um den Tasterschaft (111) ist ein Handgriff (219) gelegt, der folgenden Aufbau besitzt: An einer Hülse (200) am Tasterschaft sind nach außen abstehende Blattfedern (201a,b,c und d) eingespannt, an denen eine zweite, äußere Hülse (202) in Schaftrichtung nachgiebig aufgehängt ist. Diese zweite Hülse (202) hat außen die Form einer Kugelkalotte und auf die Kugelkalotte ist ein Ring (209) aufgesetzt, dessen Innenseite dem Radius der Kugelkalotte angepaßt ist. Der Ring (209) kann somit um den Tasterschaft gedreht werden und gegen die Achse des Tasterschafts gekippt werden. Der Ring (209) ist die eigentliche Betätigungshandhabe, die von der Bedienperson beim Abfahren des zu vermessenden Werkstücks ergriffen wird.

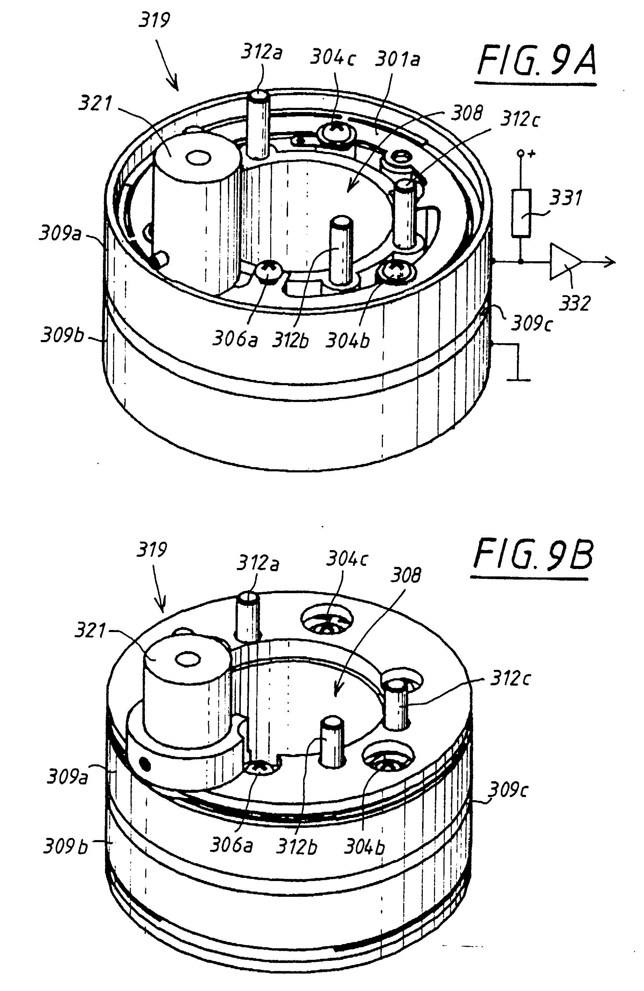

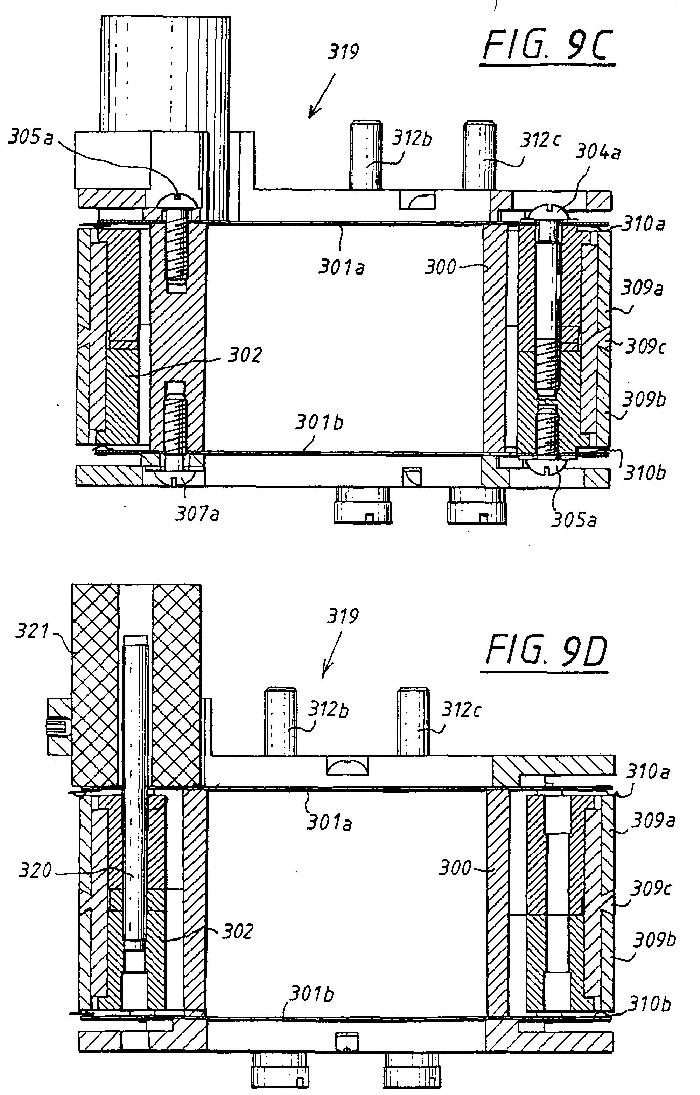

Ein alternatives Ausführungsbeispiel für eine Betätigungshandhabe zur feinfühligen Bewegung des Tasters ist in den Figuren 9a - d dargestellt. Hierbei sind die Figuren 9a perspektivische Ansichten im teilmontierten (Figur 9a) bzw. montierten (Figur 9b) Zustand und die Figuren 9c und 9d Schnittzeichnungen zweier verschiedener, die Taststiftlängsachse enthaltenden Ebenen.

Die Betätigungshandhabe bzw. der Handgriff (319) nach Figur 9a-d ist ähnlich wie der Handgriff (19) in Figur 6 nicht direkt am auslenkbaren Taststift (11), sondern an dessen Träger (10) gelagert und hieran mittels dreier Schrauben (312a,b,c) befestigt. Der Griff ist ringförmig und besitzt eine Öffnung (308), durch die der in diesem Falle auswechselbare Taststift (11) hindurch geführt werden kann. In dieser Öffnung hat der Taststift (11) allerdings genug Platz für seitliche Auslenkbewegungen.

Die Befestigungsschrauben (312a-c) sind in eine ringförmige innere Hülse (300) eingesetzt, an deren oberem und unterem Ende jeweils eine ebenfalls ringförmige Membranfeder (301a) bzw. (301b) an drei nach innen ragenden Stegen mittels der Schrauben (306a, 306b und 306c) bzw. (307a, 307b, 307c) befestigt sind. An drei um 60° gegenüber den Stegen versetzten Stellen sind die Membranfedern (301a, 301b) dann mittels dreier weiterer Schrauben (304a,b,c) bzw. (305a,b,c) an einem den Ring (300) umgebenden, zweiten Ring (302) befestigt. Der Ring (302) ist demzufolge gegen die Federkonstante der Membranfedern (301a) bzw. (301b) in Richtung der Taststiftlängsachse nachgiebig gelagert.

Der Ring (302) ist zweiteilig aufgebaut, wobei die beiden Teile durch die Schrauben (304a,b,c) zusammengehalten werden. Im dargestellten montierten Zustand trägt er an seinem Außenumfang eine flache u-förmige Nut, in die ein weiterer Ring (309) lose eingelegt ist. Der Ring (309) läßt sich somit um den Ring (302) drehen. Auf diese Weise ist der Griff (319) wieder bezüglich Torsionsmomenten von dem Taster (10) entkoppelt, an dem er befestigt ist.

Der Ring (309) selbst ist dreiteilig aufgebaut. Er besteht aus einem inneren Kunststoffring (309c), der in der Mitte seines Außenumfanges einen Steg besitzt, der zwei in Richtung der Taststiftlängsachse übereinander angeordnete metallische Ringe (309a und 309b) mit gleichem Durchmesser voneinander trennt. Die Ringe (309a und b) sind als Kontakte eines elektrischen Berührungssensors ausgebildet und zu diesem Zwecke über Kontaktfedern (310a) bzw. (310b) mit den ebenfalls voneinander isoliert montierten Membranfedern (301a und 301b) verbunden, die ihrerseits wie in Figur 9a schematisch dargestellt mit den elektrischen Bauteilen (331,332) des Berührungsschalters verbunden sind. Dieser Berührungsschalter dient dazu, das Koordinatenmeßgerät bzw. einzelne seiner Funktionen zu aktivieren, wenn die Bedienperson den Handgriff (319) anfaßt. Beispielsweise kann auf diesem Wege die Regelelektronik (49) für die z-Nachführung des Schlittens (4) in Figur 2 aktiviert werden. So wird verhindert, daß die z-Nachführung "wegdriftet", wenn das Gerät längere Zeit eingeschaltet bleibt, aber nicht benutzt wird.

Außerdem ist in den Handgriff (319) ein weiterer Sensor integriert. Hierbei handelt es sich um ein induktives Meßsystem bestehend aus einer mit dem inneren Ring (300) verbundenen Spule (321) und einem an dem äußeren Ring (302) befestigten Kern. Mit Hilfe dieses Wegmeßsystems läßt sich über die Federkonstante der Membranfedern (301a und 301b) die Kraft messen, die der Bediener in z-Richtung auf den Taster (10) ausübt. Das ist dann wichtig, wenn der Taster (10) bezüglich der vertikalen Auslenkbewegung mittels der Parallelogramme (9a und 9b) beispielsweise über diese Schraube (22) in Figur 6 geklemmt ist, um zylindrische Werkstücke z. B. in einer bestimmten Höhe abzufahren. Über die Messung der vom Bediener auf den Handgriff (319) ausgeübten Kraft in z-Richtung mit Hilfe des Meßsystems (320/321) ist es möglich, die von der Bedienkraft verursachten Verformungen des Gerätes zu bestimmen und aus dem Meßergebnis heraus zu rechnen. Zu diesem Zwecke kann die Bedienkraft ebenfalls während des gesamten Meßvorganges erfaßt und gespeichert werden, in gleicher Weise wie die Auslenkbewegungen des Taststifts (11) mit Hilfe der Meßsysteme (u,v und w) in Figur 6.

**Patentansprüche**

1. Verfahren zur Vermessung von Werkstücken mit einem handgeführten Koordinatenmeßgerät, das einen in mehreren Raumrichtungen beweglich gelagerten Träger (7) für einen Taster (10) besitzt, der an einem auslenkbaren Taststift (11) einen Antastformkörper (Tastkugel 12) trägt, wobei

   - der Antastformkörper (12) in Kontakt mit dem zu vermessenden Geometrieelement (31,32,33) des Werkstücks gebracht, und
   - aus den bei Bewegung des Trägers (7) generierten Signalen (φ, ψ, z) der Koordinatenmeßeinrichtungen und/oder bei Auslenkung des Taststifts (11) erzeugten Signalen (u,v,w) der Meßwertgeber (13a,13b,23) des Tasters (10) zur Messung der Taststiftauslenkung Steuersignale (80-84) abgeleitet werden, die den Beginn und das Ende des Meßvorganges an dem Geometrieelement bzw. die Gültigkeit der Koordinatenmeßwerte (X,Y,Z) charakterisieren.

2. Verfahren nach Anspruch 1, wobei zusätzlich das Signal eines die Betätigungskraft messenden Sensors (S1) ausgewertet und zur Ableitung der Steuersignale herangezogen wird.

3. Verfahren nach einem der Ansprüche 1 - 2, wobei das die Gültigkeit der Koordinatenmeßwerte charakterisierende Steuersignal (81,82) aus den Signalen (u,v,w) der Meßwertgeber (13a,13b,23) abgeleitet wird, die bei Auslenkung des Taststifts (11) gegenüber dem Träger (7) erzeugt werden.

4. Verfahren nach einem der Ansprüche 1 - 3, wobei als Kriterium für die Gültigkeit der Meßwerte das unter- und/oder Überschreiten vorbestimmter Grenzwerte (L1,L2) der Meßkraft (11) bzw. der Taststiftauslenkung (u,v,w) dient.

5. Verfahren nach Anspruch 4, wobei das Unter- bzw. Überschreiten der Grenzwerte (L1,L2) durch ein vorzugsweise akustisches Signal (53) angezeigt wird.

6. Verfahren nach einem der Ansprüche 1 - 5, wobei das den Beginn und das Ende eines Meßvorganges charakterisierende Steuersignal (80) aus einer Verknüpfung der bei Bewegung des Trägers (7) generierten Signale φ, ψ, z der Koordinatenmeßeinrichtungen und der bei Auslenkung des Taststifts (11) über eine bestimmte Schwelle (LO) generierten Signale der Meßwertgeber (13a/b,23) gewonnen wird.

7. Verfahren nach einem der Ansprüche 1 - 6, wobei die vor, während und nach einem Meßvorgang generierten Signale (φ, ψ, z) der Koordinatenmeßeinrichtungen sowie die Meßwerte (u,v,w) der zugehörigen Taststiftauslenkungen gespeichert werden.

8. Verfahren nach einem der Ansprüche 1 - 7, wobei aus den zwischen dem Beginn und dem Ende eines Meßvorganges generierten gültigen Koordinatenmeßwerten einfache geometrische Elemente (Kreis 31, Fläche 32, Zylinder 33, Rechteck, Ellipse etc.) bestimmt bzw. den Meßwerten zugeordnet und angezeigt werden sowie die Abweichungen der Koordinatenmeßwerte von den idealen Konturen der geometrischen Elemente.

9. Handgeführtes Koordinatenmeßgerät zur Vermessung von Werkstücken mit

   - einem in allen drei Raumrichtungen beweglichen Träger (7), dem Koordinatenmeßeinrichtungen (3,16/26,18/28) zugeordnet sind,
   - einen am Träger (7) befestigten, in mindestens zwei Raumrichtungen auslenkbaren Taststift (11), dem Meßwertgeber (13a,13b,23) zur Messung der Auslenkung (u,v,w) zugeordnet sind, und
   - einer Einrichtung (41) zur Erzeugung von Steuersignalen (80-84) aus den bei Bewegung des Trägers (7) generierten Signalen der Koordinatenmeßeinrichtungen (3,16/26,18/28) und/oder bei Auslenkung des Taststifts (11) erzeugten Signalen (u,v,w) der Meßwertgeber, wobei die besagten Steuersignale den Beginn und das Ende des Meßvorganges an dem Geometrieelement bzw. die Gültigkeit der Koordinatenmeßwerte charakterisieren und wobei besagte Einrichtung mit einem Speicher (50) zur Abspeicherung der generierten Koordinaten-meßwerte (φ, ψ, ,z) und der dazugehörigen Tasterauslenkungen (u,v,w) gekoppelt ist.

10. Koordinatenmeßgerät nach Anspruch 9, wobei dem Taststift (11) eine Betätigungshandhabe (19,119,219,319) geordnet ist, die zumindest bezüglich einiger Freiheitsgrade der Bewegung vom Taststift (11) bzw. dessen Träger (Taster 10) kräftemäßig entkoppelt ist.

11. Koordinatenmeßgerät nach Anspruch 10, wobei die Betätigungshandhabe ein gelenkig am Träger (10) des Taststifts (11) befestigter, den Taststift (11) zumindest teilweise umgebender Ring (19,309) oder Halbring ist.

12. Koordinatenmeßgerät nach Anspruch 10, wobei die Betätigungshandhabe eine am Taststift (11) nachgiebig gelagerte Hülse (119,209) ist.

13. Koordinatenmeßgerät nach Anspruch 9, wobei der Taster (10) in Richtung (w) seines Taststiftes (11) auslenkbar ist und die diesbezügliche Führung (9a/9b) klemmbar ist.

14. Koordinatenmeßgerät nach einem der Ansprüche 9 - 13, mit einer Datenverarbeitungseinheit (41,51) zur Bestimmung und Anzeige einfacher geometrischer Elemente aus gespeicherten Koordinatenmeßwerten (X,Y,Z).

15. Koordinatenmeßgerät nach einem der Ansprüche 9 - 14, mit einer Einrichtung (52/53) zur Rückkopplung eines visuellen oder akustischen Signales, welches die Gültigkeit der Koordinatenmeßwerte und/oder das Unter- bzw. Überschreiten vorbestimmter Grenzwerte (L1,L2) der Tasterauslenkung (u,v,w) anzeigt.

16. Koordinatenmeßgerät nach einem der Ansprüche 10 - 12, wobei der Betätigungshandhabe (19,119;319) ein oder mehrere bei Betätigung ansprechende Sensoren (S1;331/332;320/321) zugeordnet sind.

17. Koordinatenmeßgerät nach Anspruch 16, wobei der Sensor ein elektrischer Schalter (S1) ist, der anspricht, wenn die Betätigungskraft in Richtung des Tasterschaftes einen vorbestimmten Grenzwert (L0) überschreitet, und mit der Einrichtung (41) zur Erzeugung der Steuersignale verbunden ist.

18. Koordinatenmeßgerät nach Anspruch 16, wobei der Sensor ein Meßsystem (320/321) ist, das die Betätigungskraft in Richtung des Tasterschaftes mißt.

19. Koordinatenmeßgerät nach Anspruch 16, wobei der Sensor ein Berührungssensor (309a,b,c/331/332) ist, der das Ergreifen der Betätigungshandhabe durch die Bedienperson erkennt und zur Aktivierung vorbestimmter Funktionen des Gerätes dient.

20. Koordinatenmeßgerät nach einem der Ansprüche 9 - 19, wobei der Taststift (11) über ein federndes Kardangelenk (14) senkrecht zu seiner Längsachse auslenkbar gelagert ist.

21. Koordinatenmeßgerät nach einem der Ansprüche 1 - 20, wobei der Träger (7) für den Taster (10) des Koordinatenmeßgeräts über zwei aufeinanderfolgende Drehachsen (6,8) gelenkig mit einem motorisch höhenverstellbaren Träger (4) verbunden ist.

22. Koordinatenmeßgerät nach Anspruch 9, wobei dem Taststift (11) oder dessen Träger (10) eine Betätigungshandhabe (19) zugeordnet ist, die mit einem oder mehreren Sensoren (23) in Wirkverbindung steht, deren Signale (w), Antrieben (2) zur Nachführung des Trägers (7) für den Taststift (11) zugeführt sind.

23. Koordinatenmeßgerät nach Anspruch 9, wobei zusätzlich eine Einrichtung zur automatischen Erkennung einfacher Geometrieelemente aus den gespeicherten Signalen der Koordinatenmeßeinrichtung vorgesehen ist.

**Claims**

1. Method for measuring workpieces with the aid of a hand-held coordinate measuring instrument which has a carrier (7), supported to move in a plurality of spatial directions, for a probe (10) which bears a moulded touch part (probe sphere 12) on a deflectable probe pin (11),

   - the moulded touch part (12) is brought into contact with that geometrical element (31,32, 33) of the workpiece which is to be measured and
   - in order to measure the probe pin deflection the transducer (13a,13b,23) of the probe (10) derives from the signals (φ,γ,z), generated during movement of the carrier (7) of the coordinate measuring devices, and/or from the signals (u, v,w), generated upon deflection of the probe pin (11), control signals (80-84) which characterize the beginning and the end of the measuring operation on the geometrical element and/or the validity of the coordinate measured values (X, Y,Z).

2. Method according to Claim 1, in which, in addition, the signal of a sensor (S1) measuring the actuating force is evaluated and used to derive the control signals.

3. Method according to one of Claims 1-2, in which the control signal (81,82) characterizing the validity of the coordinate measured values is derived from the signals (u,v,w) of the transducer (13a,13b,23) which are generated upon deflection of the probe pin (11) with respect to the carrier (7).

4. Method according to one of Claims 1-3, in which the undershooting and/or overshooting of predetermined limiting values (L1,L2) of the measuring force (11) and/or of the probe pin deflection (u,v,w) serves as criterion for the validity of the measured values.

5. Method according to Claim 4, in which the undershooting or overshooting of the limiting values (L1,L2) is indicated by a preferably acoustic signal (53).

6. Method according to one of Claims 1-5, in which the control signal (80) characterizing the beginning and the end of a measuring operation is obtained from a logic combination of the signals $\varphi,\gamma,z$, generated during movement of the carrier (7), of the coordinate measuring devices and the signals, generated upon deflection of the probe pin (11) over a specific threshold (L0), of the transducers (13a/b,23).

7. Method according to one of Claims 1-6, in which the signals ($\varphi,\gamma,z$), generated before, during and after the measuring operation, of the coordinate measuring devices and the measured values (u,v,w) of the associated probe pin deflections are stored.

8. Method according to one of Claims 1-6, in which the valid coordinate measured values generated between the beginning and the end of a measuring operation are used to determine simple geometrical elements (circle 31, surface 32, cylinder 33, rectangle, ellipse etc.) and/or to assign them to the measured values and display them, as well the deviations of the coordinate measured values from the ideal contours of the geometrical elements.

9. Hand-held coordinate measuring instrument for measuring workpieces, having

- a carrier (7) which can be moved in all three spatial directions and to which the coordinate measuring devices (3,16/26,18/28) are assigned,
- a probe pin (11) which is fastened on the carrier (7) and can be deflected in at least two spatial directions, and to which the transducer (13a, 13b,23) for measuring the deflection (u,v,w) are assigned, and

- a device (41) for generating control signals (80-84) from the signals, generated during movement of the carrier (7), of the coordinate measuring devices (3,16/26,18/28) and/or signals (u,v,w), generated upon deflection of the probe pin (11), of the transducers, the said control signals characterizing the beginning and the end of the measuring operation on the geometrical element and/or the validity of the coordinate measured value, and in which said device is coupled to a memory (50) for storing the generated coordinate measured values ($\varphi,\gamma,z$) and the associated probe deflections (u,v,w).

10. Coordinate measuring instrument according to Claim 9, in which the probe pin (11) is assigned an operating grip (19,119,219,319) which at least with respect to some degrees of freedom of movement, is decoupled in terms of force from the probe pin (11) and/or the carrier (probe 10) thereof.

11. Coordinate measuring instrument according to Claim 10, in which the operating grip is a ring (19,309) or half ring which is fastened pivotably on the carrier (10) of the probe pin (11), and at least partially surrounds the probe pin (11).

12. Coordinate measuring instrument according to Claim 10, in which the operating grip is a sleeve (119,209) flexibly supported on the probe pin (11).

13. Coordinate measuring instrument according to Claim 9, in which the probe (10) can be deflected in the direction (w) of its probe pin (11), and the relevant guide (9a/9b) can be clamped.

14. Coordinate measuring instrument according to one of Claims 9-13, having a data processing unit (41,51) for determining and displaying simple geometrical elements from stored coordinate measured values (X,Y,Z).

15. Coordinate measuring instrument according to one of Claims 9-14, having a device (52/53) for feeding back a visual or acoustic signal and which displays the validity of the coordinated measured values and/or the undershooting or overshooting of prescribed limiting values (L1,L2) of the probe deflection (u,v,w).

16. Coordinate measuring instrument according to one of Claims 10-12, in which the operating grip (19,119,319) is assigned one or more sensors (S1; 331/332;320/321) which respond upon operation.

17. Coordinate measuring instrument according to Claim 16, in which the sensor is an electric switch (S1) which responds when the actuating force in the direction of the probe shaft overshoots a predetermined limiting value (L0), and is connected to the device (41) for generating the control signals.

18. Coordinate measuring instrument according to Claim 16, in which the sensor is a measuring system (320/321) which measures the actuating force in the direction of the probe shaft.

19. Coordinate measuring instrument according to Claim 16, in which the sensor is a tactile sensor (309a,b,c/331/332) which detects the gripping of the operating grip by the operator and serves to activate predetermined functions of the instrument.

20. Coordinate measuring instrument according to one of Claims 9-19, the probe pin (11) being supported deflectably perpendicular to its longitudinal axis via a resilient universal joint (14).

21. Coordinate measuring instrument according to one of Claims 1-20, the carrier (7) for the probe (10) of the coordinate measuring instrument being connected pivotably to a carrier (4) whose height can be adjusted by a motor, via two sequential axes of rotation (6,8).

22. Coordinate measuring instrument according to Claim 9, in which the probe pin (11) or the carrier (10) thereof is assigned an operating grip (19) which is operationally connected to one or more sensors (23) whose signals (w) are fed to drives (2) for correcting the carrier (7) for the probe pin (11).

23. Coordinate measuring instrument according to Claim 9, in which a device is additionally provided for automatically detecting the simple geometrical elements from stored signals of the coordinate measuring device.

**Revendications**

1. Procédé de mesure de pièces à l'aide d'un appareil de mesure de coordonnées déplacé manuellement, qui possède un support (7) monté mobile dans plusieurs directions spatiales pour un palpeur (10), qui porte un corps moulé de palpage (bille de palpeur 12) sur une tige de palpeur (11) pouvant être déviée, dans lequel

   - le corps moulé de palpage (12) est amené en contact avec l'élément géométrique à mesurer (31, 32, 33) de la pièce, et
   - des signaux de commande (80-84) sont dérivés des signaux (φ, ψ, z) des dispositifs de mesure de coordonnées générés lors du mouvement du support (7) et/ou des signaux (u, v, w) du capteur de mesure (13a, 13b, 23) du palpeur (10) produits lors de la déviation de la tige de palpeur (11) pour mesurer la déviation de la tige de palpeur, lesquels signaux définissent le début et la fin du processus de mesure sur l'élément géométrique ou la validité des valeurs de mesure des coordonnées (X, Y, Z).

2. Procédé selon la revendication 1, dans lequel le signal d'un capteur (S1) mesurant la force d'actionnement est en outre évalué et est utilisé pour dériver les signaux de commande.

3. Procédé selon l'une quelconque des revendications 1 et 2, dans lequel le signal de commande (81, 82) définissant la validité des valeurs de mesure des coordonnées est dérivé du capteur de mesure (13a, 13b, 23) à partir des signaux (u, v, w), qui sont produits lors de la déviation de la tige de palpeur (11) par rapport au support (7).

4. Procédé selon l'une quelconque des revendications 1 à 3, dans lequel le dépassement ou le sous-dépassement de valeurs limites prédéterminées (L1, L2) de la force de mesure (11) ou de la déviation (u, v, w) de la tige de palpeur sert de critère pour la validité des valeurs de mesure.

5. Procédé selon la revendication 4, dans lequel le sous-dépassement ou le dépassement des valeurs limites (L1, L2) est indiqué par un signal (53) de préférence acoustique.

6. Procédé selon l'une quelconque des revendications 1 à 5, dans lequel le signal de commande (80) définissant le début et la fin d'un processus de mesure est obtenu par une combinaison des signaux φ, ψ, z des dispositifs de mesure des coordonnées générés lors du mouvement du support et des signaux du capteur de mesure (13a/b, 23) générés lors de la déviation de la tige de palpeur (11) au-delà d'un seuil déterminé (L0).

7. Procédé selon l'une quelconque des revendications 1 à 6, dans lequel les signaux (φ, ψ, z) des dispositifs de mesure des coordonnées générés avant, pendant et après un processus de mesure ainsi que les valeurs de mesure (u, v, w) des déviations associées de la tige de palpeur sont mémorisés.

8. Procédé selon l'une quelconque des revendications 1 à 7, dans lequel des éléments géométriques simples (cercle 31, surface 32, cylindre 33, rectangle, ellipse, etc.) sont définis à partir des valeurs de mesure des coordonnées valides générées entre le début et la fin d'un processus de mesure ou sont associés aux valeurs de mesure et sont affichés, conjointement avec les écarts des valeurs de mesure des coordonnées par rapport aux contours idéaux des éléments géométriques.

9. Appareil de mesure de coordonnées déplacé manuellement pour la mesure de pièces avec

    - un support (7) mobile dans les trois directions spatiales, auquel sont associées les dispositifs de mesure de coordonnées (3, 16 / 26, 18 / 28),
    - une tige de palpeur (11) fixée au support (7), pouvant être déviée au moins dans deux directions spatiales, à laquelle des capteurs de mesure (13a, 13b, 23) sont associés pour mesurer la déviation (u, v, w), et
    - un dispositif (41) pour produire des signaux de commande (80-84) provenant des signaux des dispositifs de mesure des coordonnées (3, 16 / 26, 18 / 28) générés lors du mouvement du support (7) et/ou des signaux (u, v, w) du capteur de mesure produits lors de la déviation de la tige de palpeur (11), dans lequel lesdits signaux de commande définissent le début et la fin du processus de mesure sur les éléments géométriques, ou la validité des valeurs de mesure des coordonnées et dans lequel ledit dispositif est couplé avec une mémoire (50) pour mémoriser les valeurs de mesure des coordonnées ($\varphi$, $\psi$, z) générées et les déviations associées (u, v, w) du palpeur.

10. Appareil de mesure de coordonnées selon la revendication 9, dans lequel un manipulateur d'actionnement (19, 119, 219, 319) est associé à la tige de palpeur (11), lequel manipulateur est désaccouplé par force au moins de quelques degrés de liberté, du mouvement de la tige de palpeur (11) ou de son support (palpeur 10).

11. Appareil de mesure de coordonnées selon la revendication 10, dans lequel le manipulateur d'actionnement est une bague (19, 309) ou une demi-bague entourant au moins partiellement la tige de palpeur (11), fixée de manière articulée au support (10) de la tige de palpeur (11).

12. Appareil de mesure de coordonnées selon la revendication 10, dans lequel le manipulateur d'actionnement est une douille (119, 209) montée de manière élastique sur la tige de palpeur (11).

13. Appareil de mesure de coordonnées selon la revendication 9, dans lequel le palpeur (10) peut être dévié dans la direction (w) de sa tige de palpeur (11) et le guidage (9a/9b) par rapport à celui-ci peut être bloqué.

14. Appareil de mesure de coordonnées selon l'une quelconque des revendications 9 à 13, avec une unité de traitement des données (41, 51) pour définir et afficher des éléments géométriques simples à partir des valeurs de mesure des coordonnées mémorisées (X, Y, Z).

15. Appareil de mesure de coordonnées selon l'une quelconque des revendications 9 à 14, avec un dispositif (52/53) pour rétrocouplage d'un signal visuel ou acoustique, qui indique la validité des valeurs de mesure des coordonnées et/ou le sous-dépassement ou le dépassement de valeurs limites prédéterminées (L1, L2) de la déviation (u, v, w) du palpeur.

16. Appareil de mesure de coordonnées selon l'une quelconque des revendications 10 à 12, dans lequel un ou plusieurs capteurs (S1; 331/332; 320/321) réagissant à l'actionnement sont associés au manipulateur d'actionnement (19, 119, 319).

17. Appareil de mesure de coordonnées selon la revendication 16, dans lequel le capteur est un commutateur électrique (S1), qui réagit lorsque la force d'actionnement dépasse une valeur limite (L0) prédéterminée dans la direction de l'axe du palpeur, et est connecté au dispositif (41) pour produire les signaux de commande.

18. Appareil de mesure de coordonnées selon la revendication 16, dans lequel le capteur est un système de mesure (320/321) qui mesure la force d'actionnement dans la direction de l'axe du palpeur.

19. Appareil de mesure de coordonnées selon la revendication 16, dans lequel le capteur est un détecteur de mouvement (309a,b,c/331/332), qui reconnaît la prise du manipulateur d'actionnement par l'utilisateur et qui sert à activer des fonctions prédéterminées de l'appareil.

20. Appareil de mesure de coordonnées selon l'une quelconque des revendications 9 à 19, dans lequel la tige de palpeur (11) est montée de manière à pouvoir être déviée perpendiculairement à son axe longitudinal par l'intermédiaire d'un joint de cardan élastique (14).

21. Appareil de mesure de coordonnées selon l'une quelconque des revendications 1 à 20, dans lequel le support (7) pour le palpeur (10) de l'appareil de mesure des coordonnées est connecté de manière articulée par l'intermédiaire de deux axes de rotation (6, 8) successifs à un support (4) ajustable en hauteur au moyen d'un moteur.

22. Appareil de mesure de coordonnées selon la revendication 9, dans lequel un manipulateur d'actionnement (19) est associé à la tige de palpeur (11) ou à son support (10), lequel coopère avec un ou plusieurs capteurs (23) dont les signaux (w) sont amenés à des commandes (2) pour le guidage ultérieur du support (7) pour la tige de palpeur (11).

23. Appareil de mesure de coordonnées selon la revendication 9, dans lequel un dispositif est en outre prévu pour reconnaître automatiquement des éléments géométriques simples à partir des signaux mémorisés du dispositif de mesure des coordonnées.

## FIG.1

## FIG.4

_FIG.2_

*FIG. 3a*

*FIG. 3b*

*FIG.3c*

*FIG.5*

EP 0 703 517 B1

*FIG. 6*

*FIG. 7*

18

_FIG.8_

EP 0 703 517 B1

*FIG. 9A*

*FIG. 9B*

FIG. 9C

FIG. 9D